# EUROPÄISCHE PATENTANMELDUNG

(11) **EP 3 736 100 A1**
(43) Veröffentlichungstag der Anmeldung: **11.11.2020**
(21) Anmeldenummer: 20164992.8
(22) Anmeldetag: 23.03.2020
(51) Int. Cl.: B29C 44/36, B05C 5/02, B29C 44/46

(54) **VERFAHREN ZUR HERSTELLUNG EINER ISOLATIONSPLATTE**

(30) Priorität: 17.04.2019 DE 102019110091
(71) Anmelder: Hennecke GmbH, 53757 Sankt Augustin (DE)
(72) Erfinder: Schamberg, Martin, 53757 Sankt Augustin (DE); Steen, Alexander, 53175 Bonn (DE)
(74) Vertreter: Gosdin, Carstensen & Partner Patentanwälte Partnerschaftgesellschaft mbB

(57) **Zusammenfassung**

Die Erfindung betrifft ein Verfahren zur Herstellung einer Isolationsplatte (1) mit vorgegebener Breite (B), umfassend mindestens eine Deckschicht (2) und eine sich darauf befindliche Schicht (3) aus Isoliermaterial, wobei das Isoliermaterial erzeugt wird, indem mindestens zwei Komponenten eines Reaktivgemisches (4) dosiert, gemischt und einem Zulauf (5) eines Verteilers (6) zugeführt werden, wobei das Reaktivgemisch (4) im Verteiler (6) entlang eines Fließweges (7) zu einer Anzahl Düsenöffnungen (8) geleitet und über die Düsenöffnungen (8) ausgebracht wird, wobei das Reaktivgemisch (4) auf die Oberseite (9) der mindestens einen sich in eine Förderrichtung (F) relativ zum Verteiler (6) bewegenden Deckschicht (2) aufgebracht wird. Um ein möglichst gleichmäßiges Auftragen des Reaktionsgemisches auf die Deckschicht zu gewährleisten, sieht die Erfindung vor, dass das Reaktivgemisch über mindestens fünf Düsenöffnungen (8) ausgebracht wird, wobei das Reaktivgemisch von jeder Düsenöffnung (8) im freien Strahl (10) auf die Oberseite (9) der Deckschicht (2) aufgebracht wird, wobei die Auftreffpunkte (11) des Strahls (10) an Reaktivgemisch (4) auf die Deckschicht (2) im wesentlichen auf einer Linie (12) liegen, die quer (Q) zur Förderrichtung (F) verläuft, und wobei der Abstand (a) der beiden seitlich äußersten Auftreffpunkte (11', 11") mindestens 70 % der Breite (B) beträgt.

## Beschreibung

Die Erfindung betrifft ein Verfahren zur Herstellung einer Isolationsplatte (Isolierpanel) mit vorgegebener Breite, umfassend mindestens eine Deckschicht und eine sich darauf befindliche Schicht aus Isoliermaterial (insbesondere Isolierschaum), vorzugsweise umfassend zwei Deckschichten, zwischen denen sich die Schicht aus Isoliermaterial befindet, wobei das Isoliermaterial erzeugt wird, indem mindestens zwei Komponenten eines Reaktivgemisches dosiert, gemischt und einem Zulauf eines Verteilers zugeführt werden, wobei das Reaktivgemisch im Verteiler entlang eines Fließweges zu einer Anzahl Düsenöffnungen geleitet und über die Düsenöffnungen ausgebracht wird, wobei das Reaktivgemisch auf die Oberseite der mindestens einen sich in eine Förderrichtung relativ zum Verteiler bewegenden Deckschicht aufgebracht wird, wobei das Reaktivgemisch über mindestens fünf Düsenöffnungen ausgebracht wird, wobei das Reaktivgemisch von jeder Düsenöffnung im freien Strahl auf die Oberseite der Deckschicht aufgebracht wird, wobei die Auftreffpunkte des Strahls an Reaktivgemisch auf die Deckschicht im wesentlichen auf einer Linie liegen, die quer zur Förderrichtung verläuft, und wobei der Abstand der beiden seitlich äußersten Auftreffpunkte mindestens 70 % der Breite beträgt.

Ein gattungsgemäßes Verfahren ist aus der EP 2 051 818 B1 bekannt. Ähnliche Lösungen zeigen die EP 1 857 248 B1, die WO 2012/093129 A1, die WO 2008/104492 A2 und die US 2005/0222289 A1.

Ein solches Verfahren eignet sich insbesondere dazu, Schaumstoff-Verbundelemente mit flexiblen oder starren Deckschichten herzustellen. Solche Verbundelemente werden insbesondere zu Isolationszwecken eingesetzt. In der Regel werden solche Verbundelemente auf kontinuierlich arbeitenden Maschinen produziert. Dabei werden heute Produktionsgeschwindigkeiten bis zu 60 m/min erreicht. Typischerweise werden solche Verbundelemente in Breiten von ca. 1.200 mm produziert, für verschiedene Anwendungen sind aber auch Breiten von 600 mm bis 1.500 mm möglich.

Das grundsätzliche Verfahren für eine kontinuierliche Fertigung von Stahl-Sandwichelementen ist in der DE 16 09 668 A1 beschrieben. In der EP 1 516 720 B1 wird beschrieben, dass neben den Metalldeckschichten auch flexible Deckschichten, wie z. B. Papier oder Vliesstoffe, verwendet werden können. In der EP 1 857 248 B1 wird erläutert, dass der früher übliche oszillierende Auftrag mittels einer Gießharke hinsichtlich der Produktionsgeschwindigkeit limitiert ist. Das Verfahren mit oszillierendem Auftrag wird z. B. in der US 4 278 045 A beschrieben.

Alternativ wird in der genannten EP 1 857 248 B1 ein Verfahren vorgeschlagen, bei dem das Reaktionsgemisch über einen Verteilerkopf auf mindestens drei flexible Auslaufleitungen verteilt wird, wobei die flexiblen Auslaufleitungen quer zur Ausströmrichtung an einem starren Gestell befestigt sind. Der Nachteil an diesem Verfahren ist, dass es schwierig ist, ein Anbacken von Reaktionsgemisch innerhalb der Schläuche zu vermeiden. Um dies zu vermeiden, muss mit einer hohen Luftbeladung gefahren werden, die dann auch nicht mehr auf der Saugseite der Dosierpumpe, sondern druckseitig erzeugt werden muss, was maschinentechnisch aufwändiger ist. Bei reaktiveren Systemen stößt das Verfahren dann aber auch trotz hoher Luftbeladung an seine Grenzen, da sich die Schlauchquerschnitte mit der Zeit verengen. Dies führt zu erhöhten Druckverlusten. Falls das Anbacken nicht exakt gleichmäßig in allen Schläuchen beginnt, führt dies zu ungleicher Mengenverteilung an den einzelnen Auslaufleitungen. Das wiederum führt zu inneren Spannungen im fertigen Bauteil, die während des Abkühlvorgangs dazu führen, dass sich das fertige Verbundelement wölbt.

Eine alternative Lösung stellt eine stehende Gießharke dar. Dabei handelt es sich im Prinzip um ein starres Rohr, welches im wesentlichen quer zur Transportrichtung positioniert ist. Dieses Rohr hat eine Vielzahl von Auslassöffnungen, durch die das Reaktionsgemisch ausgetragen wird. Verschiedene Ausführungen derartiger Gießharken werden z. B. in der EP 2 051 818 B1**,** in der WO 2008/104492 A2 und in der WO 2012/093129 A1 beschrieben. Ein großes Problem derartiger Gießharken besteht darin, dass es bei diesen bei längerer Laufzeit beginnend mit den äußeren Löchern zu Anbackungen des Reaktionsgemisches kommt. Die Verweilzeit des Materials innerhalb der Gießharke ist in den äußeren Bereichen sehr groß. Außerdem sind dort in der Regel auch die Strömungsgeschwindigkeiten niedriger, da ein entsprechendes Anpassen des Strömungsquerschnittes, um diesen Effekt zu verhindern, dazu führt, dass der Gesamt-Strömungswiderstand für das Material mit den längsten Fließwegen im Vergleich zum Gesamt-Strömungswiderstand für das Material mit den kürzesten Fließwegen so groß wird, dass die Mengenverteilung ungleichmäßig wird. Ein weiteres Problem stellt die schlechte Altersverteilung dar, da das Material mit den längsten Fließwegen beim Verlassen der Gießharke deutlich älter ist als das Material mit den kürzesten Fließwegen. Es gibt zwar verschiedene Vorschläge, diesen Problemen mit unterschiedlichen Maßnahmen zu begegnen, aber das Grundproblem einer relativ großen Verweilzeit und einer relativ hohen spezifischen Oberfläche innerhalb solcher Gießharken bleibt bestehen.

Problematisch an den oben genannten Lösungen ist, dass zumindest Teile des Reaktionsgemisches bei den genannten Lösungen relativ lange Fließwege haben, bevor das Material in die Atmosphäre ausgetragen wird. Ein weiterer Nachteil dieser Lösungen besteht darin, dass die Lösungen bezogen auf den Volumenstrom eine relativ große spezifische Oberfläche besitzen. Da das reaktive, klebrige Reaktionsgemisch potentiell mit der Zeit an Oberflächen anbacken kann, ist es günstig, Austragsorgane so zu gestalten, dass diese eine möglichst geringe Volumenstrom-spezifische Oberfläche besitzen.

Eine diesbezüglich vorteilhafte Lösung wird in Fig. 5 der US 2005/0222289 A1 offenbart. Diese relativ einfache Lösung mit einem zentralen und zwei seitlichen Strahlen hat jedoch den Nachteil, dass drei Stränge zu sehr stark ausgeprägten Zusammenfließzonen im späteren Produkt führen. In diesen Zusammenfließzonen ergibt sich eine sehr ungleichmäßige und unvorteilhafte Zellorientierung, welche sich nachteilig auf die mechanischen Eigenschaften auswirkt. Außerdem ist es bei nur drei Strängen schwierig, den Prozess so zu gestalten, dass es beim Zusammenfließen nicht zu größeren Lufteinschlüssen kommt, da es bei nur drei Strängen schwieriger ist, ein Überwälzen des Reaktionsgemisches zu vermeiden, nachdem das Material die obere Begrenzung erreicht hat. Deshalb funktioniert diese Lösung bei reaktiven Systemen mit niedrigen Start- und Steigzeiten nicht.

Die in der genannten US 2005/0222289 A1 dargestellte Lösung des Problems mittels eines Auftrags über mehrere Flachstrahldüsen bringt ein anderes Problem mit sich: Der relativ hohe Impuls der Flachstrahlen sorgt dafür, dass das Material auch entgegen der Transportrichtung fließt. Da es sich um einen breitgezogenen Flachstrahl handelt, hat das entgegen der Transportrichtung fließende Reaktionsgemisch keine Möglichkeit, dem auftreffenden Strahl auszuweichen, indem es diesen seitlich passiert. Stattdessen trifft der Flachstrahl unausweichlich in das zunächst entgegen der Transportrichtung fließende Material, welches dann von der bewegten Deckschicht in Transportrichtung mitgenommen wird. Dabei kommt es zu erheblichem Einschlag von Luftblasen. Außerdem ist es nahezu unmöglich, mit einem Flachstrahl eine gleichmäßige Mengenverteilung über der Breite zu erzielen. Dabei ist die undefinierte Mengenverteilung, die man mit einem Flachstrahl erreicht (insbesondere an den Rändern kommt es zu einer Materialanhäufung, da die Oberflächenspannung dafür sorgt, dass der Flachstrahl außen zusammen gezogen wird), verfahrenstechnisch problematischer als die definierte Verteilung, die man mit einzelnen diskreten, aber definierten Strängen erzielt. Bei den Flachstrahlen ist es daher in der Realität schwieriger, Lufteinschlüsse unter der oberen Deckschicht zu vermeiden.

Außerdem besteht bei dem in der US 2005/0222289 A1 vorgeschlagenen Verfahren ebenso wie bei dem in der EP 1 857 248 B1 beschriebenen Verfahren der Nachteil, dass es je nach Reaktivität des Schaumsystems schwierig ist, ein Anbacken von Material an den Wandungen des Verteilsystems auch bei Produktionen über mehrere Stunden zu vermeiden.

Hierbei ist zu beachten, dass man bevorzugt sehr reaktive Systeme einsetzen möchte, um den Effekt der sog. Ostwald-Reifung zu vermeiden, bei der insbesondere gegen Ende der Steigzeit kleinere Blasen im Schaum verschwinden, indem sie in die benachbarten größeren Blasen diffundieren. Dadurch verschlechtern sich die Isoliereigenschaften. Bei schnelleren Systemen ist dieser Prozess auf ein kürzeres Zeitfenster beschränkt, deshalb lassen sich mit schnelleren Systemen feinzelligere Endprodukte mit besseren Isoliereigenschaften herstellen. Der Effekt der Ostwald-Reifung wird z. B. in der EP 3 176 206 A1 detailliert beschrieben. In dieser Veröffentlichung wird auch auf die Bedeutung der Feinzelligkeit einer Schaumstruktur in Bezug auf die Isoliereigenschaften eingegangen.

Im Lichte der vorstehend beschrieben verschiedenen Probleme liegt der vorliegenden Erfindung die **Aufgabe** zugrunde, ein gattungsgemäßes Verfahren so fortzubilden, dass es möglich ist, ein gleichmäßiges Auftragen des Reaktionsgemisches auf die sich kontinuierlich bewegende Deckschicht zu gewährleisten, wobei gleichzeitig auch sichergestellt wird, dass auch bei langen Produktionen und reaktiven Systemen ein Anbacken von Reaktionsgemisch an den Wandungen des Verteilers zuverlässig vermieden werden kann. Ein weiteres wesentliches Ziel der vorliegenden Erfindung besteht darin, das Material so aufzutragen, dass das Alter der Reaktivmischung auf einer imaginären Ebene orthogonal zur Transportrichtung möglichst homogen ist. Eine inhomogene Altersverteilung der verschiedenen Stränge führt zu Problemen beim Zusammenwachsen der verschiedenen Stränge und zu inhomogenen physikalischen Eigenschaften des Endproduktes, was erfindungsgemäß vermieden werden soll. Ein besonders kritischer Effekt ist hierbei, dass sich die Verbundelemente aufgrund innerer Spannungen beim Abkühlen verbiegen und nicht mehr eben sind. Weiterhin wird angestrebt, den Blaseneinschlag beim Auftrag des Reaktivgemisches auf die Deckbahn zu vermeiden bzw. zu minimieren.

Die **Lösung** dieser Aufgabe durch die Erfindung ist dadurch gekennzeichnet, dass das (mittlere) Alter des Reaktivgemisches in jedem von den Düsenöffnungen ausgebrachten Strahl beim Schnitt mit einer Ebene, die senkrecht auf der Förderrichtung steht, um höchstens 0,5 Sekunden von einem arithmetischen Mittelwert über alle Strahlen abweicht, wobei der Verteiler eine Volumenstrom-spezifische Oberfläche aufweist, die höchstens 2,0 cm²/(cm³/s) beträgt (Quotient aus der mit Reaktivgemisch in Kontakt stehenden Oberfläche und dem den Verteiler passierenden Volumenstrom Reaktivgemisch).

Das Mischen der Komponenten zum Reaktivgemisch erfolgt zunächst in einem zentralen Mischorgan, bevor es an den Zulauf des Verteilers übergeben wird. Über die Düsenöffnungen gelangt das Reaktivgemisch in die Atmosphäre und gelangt im freien Strahl (also gemäß der Form einer Wurfparabel) auf die Deckschicht. Die Deckschicht bewegt sich dabei in der Regel in die horizontale Förderrichtung.

Die Wahl von mindestens fünf Düsenöffnungen hat zur vorteilhaften Folge, dass sich auch in den Zusammenfließzonen eine relativ definierte Zellorientierung erreichen lässt. Gewünscht ist eine Zellorientierung, bei der die Zellen auch und speziell im Bereich unmittelbar unterhalb der oberen Deckschicht vertikal leicht gestreckt sind, da sich dies positiv auf die mechanischen Eigenschaften des Panels auswirkt. Bei weniger als fünf Strängen werden die einzelnen Stränge sehr stark nach außen gedrückt, nachdem das Reaktivgemisch die obere Begrenzung erreicht hat. Dabei ergibt sich dann eine chaotische und ungünstige Zellorientierung in den Zusammenfließzonen. Ferner wird es bei mindestens fünf Strängen leichter, ein Überwälzen des Materials zu vermeiden, nachdem das Reaktivgemisch die obere Begrenzung erreicht hat.

Vorteilhaft wird an den Düsenöffnungen eine saubere Abrisskante vorgesehen, damit sich ausgangsseitig an der Düsenöffnung kein Kragen bilden kann, der nachteilig im Laufe einer längeren Produktionszeit die Flugbahn des Materials beeinflussen könnte. Insoweit wird bevorzugt vorteilhaft vorgesehen, dass eine spitz zulaufende äußere Düsenkontur (größer als 90°) vorliegt.

Durch die vorgeschlagene Ausgestaltung wird weiter erreicht, dass auch die Eck- bzw. Randbereiche des herzustellenden Produkts sauber mit Reaktivgemisch gefüllt sind.

Nachdem die Auftreffpunkte des Strahls an Reaktivgemisch auf die Deckschicht im wesentlichen auf einer Linie liegen sollen, ist diesbezüglich insbesondere und vorzugsweise vorgesehen, dass alle Auftreffpunkte auf der Deckschicht in einem Abschnitt liegen, der sich über maximal 200 mm, vorzugsweise über maximal 100 mm, in Förderrichtung erstreckt. Die Auftreffpunkte der Strahlen auf der kontinuierlich bewegten Deckschicht liegen also in Transportrichtung bevorzugt innerhalb eines Korridors von maximal 200 mm. Hiermit wird eine gute Altersverteilung sichergestellt. Die Betriebsparameter des Verteilers (insbesondere die Volumenströme und Drücke des Reaktivgemisches) und dessen geometrische Gestaltung (insbesondere die Lage und Ausrichtung der einzelnen Düsen bzw. Düsenöffnungen am Verteiler) werden fachmännisch vorgenommen, um das genannte Vorgehen zu realisieren.

Das Reaktivgemisch im Verteiler wird vorzugsweise vom Zulauf bis zu den Düsenöffnungen über eine maximale Länge von 150 mm geführt. Diese Ausgestaltung hat den Vorteil, dass weniger Anbackungen von Material an den Wandungen im Verteiler stattfinden. Insbesondere in Kombination mit hohen Strömungsgeschwindigkeiten wird dieser nachteilige Effekt weiter vermindert. Insoweit ist insbesondere und bevorzugt vorgesehen, dass die (mittlere) Austrittsgeschwindigkeit des Reaktivgemisches aus den Düsenöffnungen zwischen 1,5 m/s und 5,0 m/s liegt. Der genannte Bereich hat sich als optimal herausgestellt, da zu geringe Geschwindigkeiten bedeuten, dass die Strahlen nicht weit genug reichen bzw. in der Folge der Verteiler sehr hoch positioniert werden muss. Indes führen zu hohe Geschwindigkeiten zum Spritzen beim Auftrag.

Weiterhin ist bevorzugt vorgesehen, dass die (mittlere) Verweilzeit des Reaktivgemisches im Verteiler maximal 0,15 Sekunden beträgt. Eine solche geringe Verweilzeit ist insbesondere für reaktive Systeme sehr vorteilhaft, um Anbackungen an den Wandungen des Verteilers zu verhindern.

Als Alter des Gemisches an einer spezifischen Stelle ist insoweit die Zeit zu verstehen, die seit Eintritt des Reaktivgemisches in den Zulauf des Verteilers bis zum Erreichen der spezifischen Stelle vergangen ist. Somit weicht das mittlere Alter des Reaktivgemisches in den verschiedenen Strängen in einer imaginären Ebene orthogonal zur Transportrichtung um maximal 1 Sekunde voneinander ab. Eine solche günstige Altersverteilung ist wichtig, damit keine inneren Spannungen im fertigen Bauteil entstehen, die beim Abkühlen zu einer Wölbung im Bauteil führen können.

Alle Strahlen des Reaktivgemisches in Richtung quer zur Förderrichtung treffen bevorzugt im wesentlichen gleichmäßig beabstandet auf der Deckschicht auf. Dabei ist insbesondere vorgesehen, dass für alle Strahlen des Reaktivgemisches ein Toleranzbereich von 20 % des Abstands vom benachbarten Strahl gilt. Für die Auftreffpunkte der Strahlen auf der kontinuierlich bewegten Bahn quer zur Transportrichtung liegen somit äquidistante Abstände mit einer Toleranz von maximal +/-10% vor. Eine solche gleichmäßige Verteilung ist für ein gleichmäßiges Zusammenwachsen aller Stränge wichtig, nachdem das Material die obere Deckschicht erreicht hat. Ansonsten kann es schwierig sein, eine komplette Füllung bzw. eine gute Dichteverteilung zu erreichen. Eine ungleichmäßige Verteilung kann auch wieder zu inneren Spannungen während des Abkühlens führen, was dann wieder zu einem Verzug der fertigen Platten (Panels) führen kann.

Die beiden seitlich äußersten Düsenöffnungen bringen das Reaktivgemisch bevorzugt in zwei Richtungen aus, die zusammen eine Ebene aufspannen, wobei sich die beiden Richtungen unter einem Winkel zwischen 90° und 180° schneiden. Insoweit liegen dann also die Geschwindigkeitsvektoren der aus den beiden äußeren Düsen austretenden Strahlen innerhalb von vertikal ausgerichteten Ebenen, die den genannten Winkel einschließen.

Bei der erfindungsgemäß vorgesehenen Volumenstrom-spezifischen Oberfläche handelt es sich um den Quotienten aus der mit Reaktivgemisch in Kontakt stehenden Oberfläche und dem den Verteiler passierenden Volumenstrom Reaktivgemisch. Eine solche geringe spezifische Oberfläche ist wiederum besonders für reaktive Systeme sehr vorteilhaft, um Anbackungen an den Wandungen des Verteilers zu verhindern.

Bevorzugt beträgt die Breite des Verteilers in Richtung (horizontal und) quer zur Förderrichtung höchstens 25 % der Breite der herzustellenden Isolierplatte, bevorzugt höchstens 15 % dieser Breite.

Bei sich bewegender Deckschicht ist der Verteiler bevorzugt ortsfest angeordnet.

Die Breite der hergestellten Isolierpanels liegt typischerweise bei ca. 1.200 mm; für verschiedene Anwendungen können auch Breiten zwischen 600 mm und 1.500 mm vorgesehen werden.

In den Zeichnungen ist ein Ausführungsbeispiel der Erfindung dargestellt. Es zeigen:
- Fig. 1: schematisch eine perspektivische Ansicht eines Verteilers (d. h. eines Verteilerorgans), mit dem Reaktivgemisch auf eine Deckschicht aufgebracht wird, um eine Isolationsplatte (Isolierpanel) herzustellen,
- Fig. 2: den Schnitt durch den Verteiler mit eingezeichnetem Fließweg zu einer der Düsenöffnungen,
- Fig. 3: die Draufsicht auf den Verteiler mit den aus diesem austretenden Strahlen aus Reaktivgemisch,
- Fig. 4: die Vorderansicht des Verteilers und
- Fig. 5: die Seitenansicht des Verteilers.

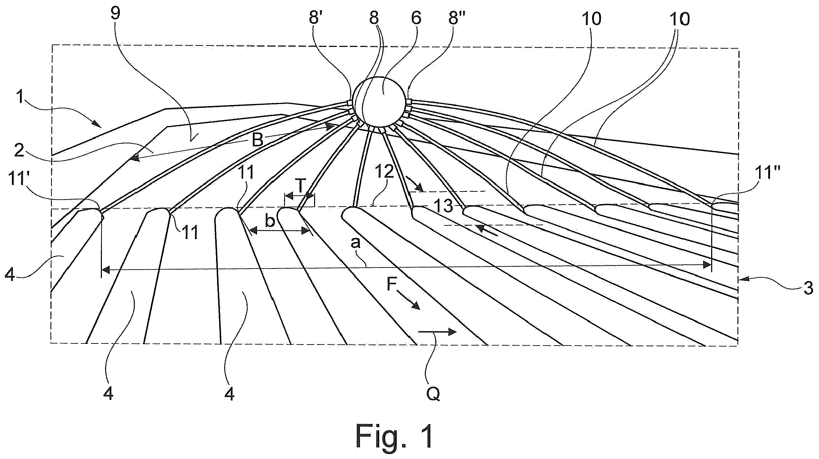

In Figur 1 ist schematisch eine Anlage dargestellt, mit der ein Isolier-Panel 1 (Isolationsplatte als Schaumstoff-Verbundelement) hergestellt wird, indem auf eine Deckschicht 2 eine Schicht aus Isoliermaterial 3 in Form eines Polyurethan-Reaktivgemisches 4 aufgebracht wird. Das Isolier-Panel 1 weist eine Breite B auf.

Hierbei bewegt sich die Deckschicht 2 unterhalb eines ortsfest angeordneten Verteilers 6, aus dem das Reaktivgemisch 4 ausgebracht wird, in eine Förderrichtung F mit konstanter Geschwindigkeit.

Wie es aus der Zusammenschau mit den anderen Figuren ersichtlich ist, wird das Polyurethan-Reaktivgemisch 4 aus dem Verteiler 6 in Form einer Anzahl von Strahlen 10 ausgebracht, d. h. über Düsenöffnungen 8 im Verteiler 6 wird das Reaktivgemisch 4 ausgespritzt, so dass es, wie es am besten aus Figur 1 ersichtlich ist, als freier Strahl und der Form einer Flugparabel folgend, auf die Deckschicht 2 gelangt, wo es an einer entsprechenden Zahl Auftreffpunkten 11 die Oberseite 9 der Deckschicht 2 kontaktiert.

Im Ausführungsbeispiel sind elf Strahlen 10 vorgesehen, wobei die Anzahl der Strahlen 10 erfindungsgemäß mindestens fünf ist; besonders bewährt haben sich auch sieben und neun Strahlen 10. Wesentlich ist weiterhin, dass die genannten Auftreffpunkte 11 des jeweiligen Strahls 10 an Reaktivgemisch 4 auf die Deckschicht 2 im wesentlichen auf einer Linie 12 liegen, die quer zur Förderrichtung F verläuft, die mit Q bezeichnet ist. Weiterhin ist vorgesehen, dass der Abstand a (s. Figur 1) der beiden seitlich äußersten Auftreffpunkte 11' und 11" mindestens 70 % der Breite B beträgt.

Der Umstand, dass die Strahlen 10 die Deckschicht 2 im wesentlichen entlang der Linie 12 erreichen, sei dadurch spezifiziert, dass für die besagten Auftreffpunkte 11 vorgesehen ist, dass sie innerhalb eines Abschnitts 13 (s. Figur 1) liegen, der sich in Förderrichtung F bevorzugt über maximal 100 mm erstreckt.

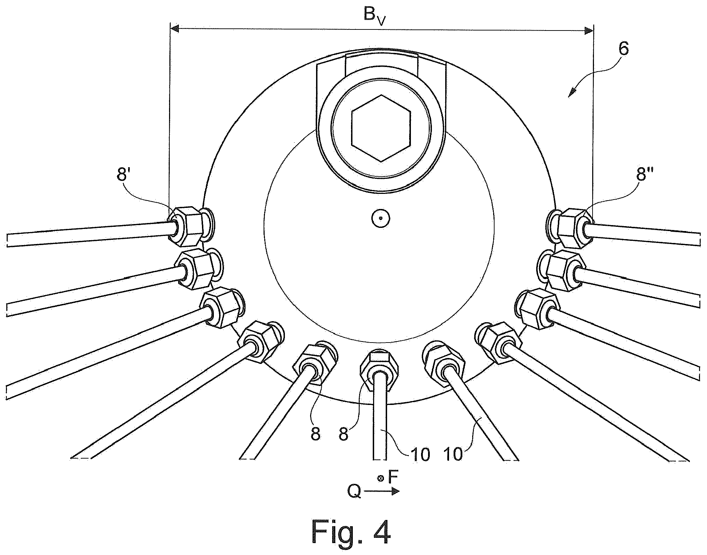

Die Breite B_{V} (s. Figur 4) des Verteilers 6, d. h. dessen Erstreckung in Richtung Q horizontal und quer zur Förderrichtung F (und damit auch die Breite des mit Düsenöffnungen 8 versehenen Abschnitts des Verteilers 6), beträgt dabei bevorzugt höchstens 25% der Breite B der herzustellenden Isolierplatte, besonders bevorzugt höchstens 15 % der Breite B.

Die einzelnen Strahlen 10 sollen in Richtung Q möglichst äquidistant die Oberfläche 9 der Deckschicht 2 erreichen. Hierfür ist in Figur 1 illustriert, dass für besagten Auftreffpunkt 11 vorgesehen ist, dass er unter Zugrundelegung einer äquidistanten Beanstandung der einzelnen Strahlen 10 in einem Toleranzbereich T liegen soll, der bevorzugt maximal 20 % des Abstands b vom benachbarten Strahl 10 beträgt.

Demgemäß werden vom Verteiler 6 im Ausführungsbeispiel elf Strahlen 10 ausgebracht, die auf die sich in horizontale Richtung kontinuierlich bewegende Deckschicht 2 gelangen und dann in Form von elf Strängen weitertransportiert werden.

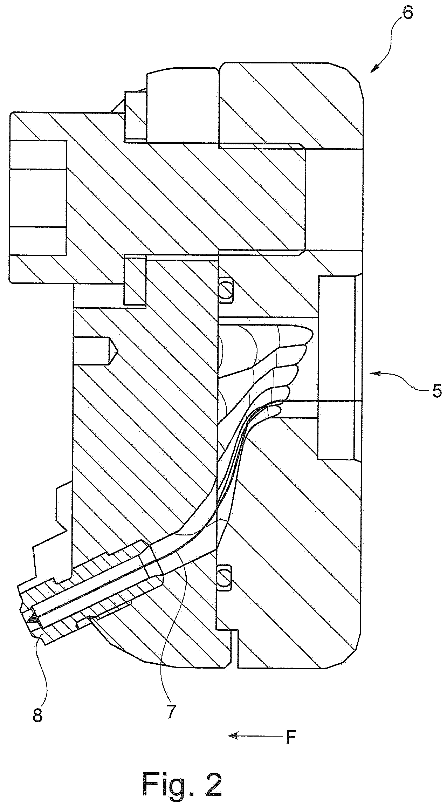

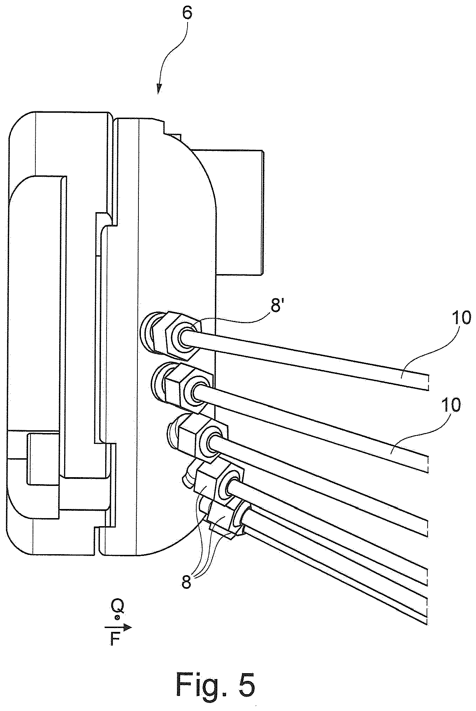

Einzelheiten zum Verteiler 6 können den weiteren Figuren 2 bis 5 entnommen werden.

In Figur 2 ist der Schnitt durch den Verteiler dargestellt, wobei dieser genau durch den mittleren von insgesamt elf Fließwegen 7 verläuft. Hieraus ergibt sich, dass der Verteiler 6 einen Zulauf 5 aufweist, über den er mit dem Reaktivgemisch 4 von einem nicht dargestellten Mischer gespeist wird. Das Reaktivgemisch 4 wird dann entlang eines Fließwegs 7 gefördert, um zu einer Düsenöffnung 8 zu gelangen, über die es in der beschriebenen Weise als Strahl 10 ausgespritzt wird. Um Anbackungen zu verhindern, ist der Fließweg 7 bevorzugt maximal 150 mm lang.

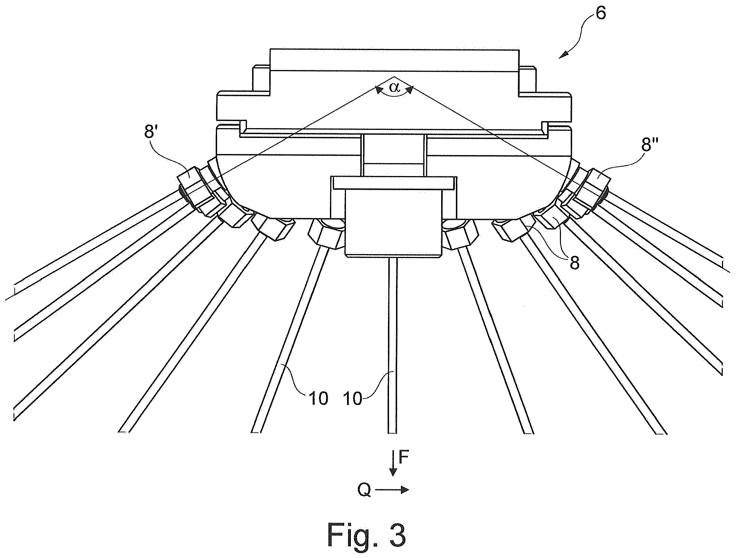

Aus der Draufsicht gemäß Figur 3 geht hervor, dass die beiden äußersten Düsenöffnungen 8' und 8" so angeordnet sind, dass die Ausspritzrichtung aus ihnen den Winkel α einschließen, der zwischen 90° und 180° beträgt. Die eingetragenen Linien kennzeichnen also die Längsachsen der beiden äußeren Düsen 8' und 8".

Wie sich aus den Figuren weiter ergibt, spritzen die Düsenöffnungen 8 das Reaktivgemisch 4 in Förderrichtung F aus, also mit der Bewegung der Deckschicht 2, die sich mit konstanter Geschwindigkeit unter dem ortsfest angeordneten Verteiler 6 in Förderrichtung F bewegt.

Wie sich aus den Figuren 3 bis 5 hinsichtlich der Anordnung und Ausrichtung der einzelnen Düsenöffnungen 8 ergibt, sind die einzelnen Düsenöffnungen bzw. Düsen in sehr unterschiedlichen Winkeln zur Horizontalen angeordnet. Die äußeren Düsenöffnungen werden mit einem deutlich kleineren Winkel zur Horizontalen angeordnet. Die fachmännische Gestaltung gewährleistet das oben genannte Ziel, bei gegebenen Betriebsparametern die Auftreffpunkte 11 nebeneinander in Querrichtung Q entlang der Linie 12 zu platzieren.

Mit der vorgeschlagenen Ausgestaltung wird erreicht, dass das Reaktivgemisch 4 letztlich als sehr homogene Schicht 3 auf die Deckschicht 2 aufgebracht wird, so dass die Qualität des herzustellenden Isolierpanels optimiert werden kann.

### Bezugszeichenliste:

- 1: Isolationsplatte (Schaumstoff-Verbundelement)
- 2: Deckschicht
- 3: Schicht aus Isoliermaterial
- 4: Reaktivgemisch
- 5: Zulauf des Verteilers
- 6: Verteiler
- 7: Fließweg
- 8: Düsenöffnung (Düse)
- 8': Düsenöffnung (Düse)
- 8": Düsenöffnung (Düse)
- 9: Oberseite
- 10: Strahl
- 11: Auftreffpunkt
- 11': Auftreffpunkt
- 11": Auftreffpunkt
- 12: Linie
- 13: Abschnitt (Toleranzband)

- B: Breite
- F: Förderrichtung
- Q: Richtung quer zur Förderrichtung
- T: Toleranzbereich
- B_{V}: Breite des Verteilers
- a: Abstand der beiden seitlich äußersten Auftreffpunkte
- b: Abstands vom benachbarten Strahl
- α: Winkel

## Patentansprüche

1. Verfahren zur Herstellung einer Isolationsplatte (1) mit vorgegebener Breite (B), umfassend mindestens eine Deckschicht (2) und eine sich darauf befindliche Schicht (3) aus Isoliermaterial, vorzugsweise umfassend zwei Deckschichten (2), zwischen denen sich die Schicht (3) aus Isoliermaterial befindet, wobei das Isoliermaterial erzeugt wird, indem mindestens zwei Komponenten eines Reaktivgemisches (4) dosiert, gemischt und einem Zulauf (5) eines Verteilers (6) zugeführt werden, wobei das Reaktivgemisch (4) im Verteiler (6) entlang eines Fließweges (7) zu einer Anzahl Düsenöffnungen (8) geleitet und über die Düsenöffnungen (8) ausgebracht wird, wobei das Reaktivgemisch (4) auf die Oberseite (9) der mindestens einen sich in eine Förderrichtung (F) relativ zum Verteiler (6) bewegenden Deckschicht (2) aufgebracht wird,
wobei das Reaktivgemisch über mindestens fünf Düsenöffnungen (8) ausgebracht wird,
wobei das Reaktivgemisch von jeder Düsenöffnung (8) im freien Strahl (10) auf die Oberseite (9) der Deckschicht (2) aufgebracht wird,
wobei die Auftreffpunkte (11) des Strahls (10) an Reaktivgemisch (4) auf die Deckschicht (2) im wesentlichen auf einer Linie (12) liegen, die quer (Q) zur Förderrichtung (F) verläuft, und
wobei der Abstand (a) der beiden seitlich äußersten Auftreffpunkte (11', 11") mindestens 70 % der Breite (B) beträgt,
**dadurch gekennzeichnet,**
**dass** das Alter des Reaktivgemisches (4) in jedem von den Düsenöffnungen (8) ausgebrachten Strahl (10) beim Schnitt mit einer Ebene, die senkrecht auf der Förderrichtung (F) steht, um höchstens 0,5 Sekunden von einem arithmetischen Mittelwert über alle Strahlen (10) abweicht, wobei der Verteiler (6) eine Volumenstrom-spezifische Oberfläche aufweist, die höchstens 2,0 cm²/(cm³/s) beträgt (Quotient aus der mit Reaktivgemisch (4) in Kontakt stehenden Oberfläche und dem den Verteiler (6) passierenden Volumenstrom Reaktivgemisch (4)).

2. Verfahren nach Anspruch 1, **dadurch gekennzeichnet, dass** alle Auftreffpunkte (11) auf der Deckschicht (2) in einem Abschnitt (13) liegen, der sich über maximal 200 mm, vorzugsweise über maximal 100 mm, in Förderrichtung (F) erstreckt.

3. Verfahren nach Anspruch 1 oder 2, **dadurch gekennzeichnet, dass** das Reaktivgemisch im Verteiler (6) vom Zulauf (5) bis zu den Düsenöffnungen (8) über eine maximale Länge von 150 mm geführt wird.

4. Verfahren nach einem der Ansprüche 1 bis 3, **dadurch gekennzeichnet, dass** die Austrittsgeschwindigkeit des Reaktivgemisches (4) aus den Düsenöffnungen (8) zwischen 1,5 m/s und 5,0 m/s liegt.

5. Verfahren nach einem der Ansprüche 1 bis 4, **dadurch gekennzeichnet, dass** die Verweilzeit des Reaktivgemisches (4) im Verteiler (6) maximal 0,15 Sekunden beträgt.

6. Verfahren nach einem der Ansprüche 1 bis 5, **dadurch gekennzeichnet, dass** alle Strahlen (10) des Reaktivgemisches (4) in Richtung (Q) quer zur Förderrichtung (F) im wesentlichen gleichmäßig beabstandet auf der Deckschicht (2) auftreffen.

7. Verfahren nach Anspruch 6, **dadurch gekennzeichnet, dass** für alle Strahlen (10) des Reaktivgemisches (4) ein Toleranzbereich (T) von 20 % des Abstands (b) vom benachbarten Strahl (10) gilt.

8. Verfahren nach einem der Ansprüche 1 bis 7, **dadurch gekennzeichnet, dass** die beiden seitlich äußersten Düsenöffnungen (8', 8") das Reaktivgemisch (4) in zwei Richtungen ausbringen, die zusammen eine Ebene aufspannen, wobei sich die beiden Richtungen unter einem Winkel (α) zwischen 90° und 180° schneiden.

9. Verfahren nach einem der Ansprüche 1 bis 8, **dadurch gekennzeichnet, dass** ein Verteiler (6) verwendet wird, dessen Breite (B_{V}) in Richtung (Q) quer zur Förderrichtung (F) höchstens 25 % der Breite (B) der herzustellenden Isolierplatte (1), bevorzugt höchstens 15 % der Breite (B) der Isolierplatte (1), beträgt.

10. Verfahren nach einem der Ansprüche 1 bis 9, **dadurch gekennzeichnet, dass** bei sich bewegender Deckschicht (2) der Verteiler (6) ortsfest angeordnet ist.
